# EUROPEAN PATENT SPECIFICATION

(11) **EP 3 757 391 B1**
(45) Date of publication and mention of the grant of the patent: **20.12.2023**
(21) Application number: 19205554.9
(22) Date of filing: 28.10.2019
(51) Int. Cl.: F04C 14/24, F04C 23/00, F04C 28/24

(54) **SUCTION VALVE ASSEMBLY OF COMPRESSOR**
SAUGVENTILANORDNUNG EINES KOMPRESSORS
ENSEMBLE DE SOUPAPE D'ASPIRATION DE COMPRESSEUR

(30) Priority: 25.06.2019 KR 20190075504
(43) Date of publication of application: 30.12.2020
(73) Proprietor: LG Electronics Inc., SEOUL, 07336 (KR)
(72) Inventor: LEE, Donggeun, 08592 Seoul (KR); KIM, Kyojin, 08592 Seoul (KR)
(74) Representative: Vossius & Partner Patentanwälte Rechtsanwälte mbB

(56) References cited:
- EP-A1- 1 655 492
- WO-A1-2006/073048
- CH-A- 164 448

## Description

The present invention relates to a suction valve assembly of a compressor, which is positioned in a flow path of a suction pipe through which a refrigerant is supplied into the compressor, so as to open and close the flow path of the suction pipe.

Generally, a compressor is a mechanical device used for producing high pressure or transferring a high-pressure fluid, and the compressor applied to a refrigeration cycle of a refrigerator or an air conditioner compresses a refrigerant and transfers the compressed refrigerant to a condenser.

The compressors are typically classified into a reciprocating compressor, a rotary compressor, and a scroll compressor according to a method of compressing a gas refrigerant.

Particularly, the scroll compressor is configured to have a fixed scroll fixed in an inner space of a sealed container and an orbiting scroll engaged with the fixed scroll so as to perform an orbiting movement, whereby the suction, gradual compression, and discharge of the refrigerant are continuously and repetitively performed by a compression chamber continuously defined between a fixed wrap of the fixed scroll and an orbiting wrap of the orbiting scroll.

In addition, a discharge hole is provided in the fixed scroll of the scroll compressor so as to discharge the compressed refrigerant, and a discharge valve is provided in the discharge hole. Accordingly, the refrigerant compressed in the compression chamber may be discharged to a discharge chamber and, when operation of the compressor stops, the discharge hole may be closed so as to prevent the refrigerant from reversely flowing through the discharge hole and the orbiting scroll from reversely rotating. Such a scroll compressor is disclosed in Korean Patent Application Publication No. 10-2016-0020190.

However, the structure of preventing a reverse flow of refrigerant by using the discharge valve, which is described above, prevents the reverse flow of the refrigerant existing only in the discharge chamber. However, when operation of the compressor stops, the structure may not prevent refrigerant and oil existing in the compression chamber defined between the fixed scroll and the orbiting scroll from reversely flowing through a refrigerant suction pipe to an accumulator. In addition, product reliability of consumers has decreased due to hitting noise occurring during the operation of the compressor.

Of course, recently, to prevent a refrigerant and oil from reversely flowing through the refrigerant suction pipe, which is described above, to the accumulator, there are provided various reverse flow prevention valves on a refrigerant discharge side of the refrigerant suction pipe (or a refrigerant inflow side of the compression chamber), in an inner part of the refrigerant suction pipe, or in the accumulator. The various reverse flow prevention valves are disclosed in Korean Patent No. 10-0575700, Korean Patent Application Publication No. 10-2018-0083646, and Korean Patent Application Publication No. 10-2018-0086749.

However, as for the compressor having a structure of employing each of the reverse flow prevention valves, which are described above, when operation of the compressor stops, an inner space of the compression chamber is in a high-pressure state, but an inner space of the accumulator is relatively in a low-pressure state. Accordingly, refrigerant in the compression chamber and oil stored in an oil storage space in the compressor also momentarily reversely flow through the compression chamber and the refrigerant suction pipe into the accumulator. In this case, although the refrigerant reversely flows to the accumulator, no problem occurs. However, when oil reversely flows to the accumulator, an oil amount in the compressor decreases, whereby various problems such as deterioration of lubricating performance caused by occurrence of oil deficiency may occur.

Furthermore, in a structure of a conventional compressor, in which a valve uses a restoring force of a coil spring, the malfunction or damage of the valve may occur due to torsion of the coil spring.

In addition, as for the conventional compressor, it is difficult to install the valve for preventing the reverse flow of the refrigerant and oil on the refrigerant discharge side of the refrigerant suction pipe (or the refrigerant inflow side of the compression chamber), in the inner part of the refrigerant suction pipe, or in the accumulator. Accordingly, installation and maintenance of the valve are difficult.

### Documents of Related Art

(Patent Document 0001) Korean Patent Application Publication No. 10-2016-0020190
(Patent Document 0002) Korean Patent No. 10-0575700
(Patent Document 0003) Korean Patent Application Publication No. 10-2018-0083646
(Patent Document 0004) Korean Patent Application Publication No. 10-2018-0086749

CH 164 448 A discloses a suction valve assembly using a coil spring for applying restoring force to a valve.

Accordingly, the present invention has been made keeping in mind the above problems occurring in the related art, and the present invention is intended to propose a compressor according to appended claim 1 comprising a suction valve assembly of a new type compressor, wherein when operation of a compressor stops, a connection portion between a refrigerant suction pipe and an accumulator can be quickly and accurately closed, so that a reverse flow of oil is prevented.

In addition, the present invention is intended to propose a suction valve assembly of a new type compressor, wherein when the operation of the compressor stops, a flow path can be quickly closed by pressure difference between the refrigerant suction pipe and the accumulator and when the operation of the compressor restarts, the flow path can be quickly opened by weight and pressure of sucked refrigerant.

Furthermore, the present invention is intended to propose a suction valve assembly of a new type compressor, wherein installation and maintenance thereof can be efficiently performed.

Additionally, the present invention is intended to propose a suction valve assembly of a new type compressor, wherein during the operation of the compressor, refrigerant loss which may occur in a suction process of refrigerant can be prevented so that performance deterioration of the compressor is prevented and when the operation of the compressor stops, a flow path can be quickly closed.

The above object is achieved by a compressor according claim 1, whose suction valve assembly, when operation of the compressor stops, blocks a connection portion between the body part and the accumulator so as to prevent a reverse flow of oil to the accumulator. Accordingly, when the operation of the compressor stops, compressed oil is prevented from reversely flowing to the accumulator.

Here, the suction valve assembly for the compressor of the present invention further includes a protruding pipe so as to guide a movement of the lifting/lowering valve, whereby the lifting/lowering valve may move stably due to the protruding pipe. In this case, a lower part of the protruding pipe may be configured to be closed or selectively opened.

In addition, according to the suction valve assembly for the compressor of the present invention, the lifting/lowering valve is a pipe body and include one or more communicating holes provided along a circumference thereof, whereby the lifting/lowering valve is efficiently moved upward by the pressure difference between the accumulator and the compression chamber.

The lifting/lowering valve may be formed to be the pipe body of a cylindrical shape having a circular cross-section, or the pipe body having a cross-section of any one shape of an oval shape, a rounded rectangle shape, a polygonal shape, or a polygonal shape having one or more rounded edges.

Each of the communicating holes may be formed to be a circular hole or a non-circular hole.

At least a portion between an outer circumferential surface of the lifting/lowering valve and an inner circumferential surface of the protruding pipe may be provided to be in surface contact.

Furthermore, according to the suction valve assembly of the compressor of the present invention, an escaping groove may be concavely formed on the outer circumferential surface of the lifting/lowering valve, whereby while the lifting/lowering valve lifts or lowers in the protruding pipe, a contact area between the lifting/lowering valve and the inner circumferential surface of the protruding pipe may be preferably reduced so as to decrease oil resistance.

Additionally, according to the suction valve assembly for the compressor of the present invention, a distance of the lifting/lowering valve protruding from the protruding pipe and a range of the communicating hole exposed to an inner part of the horizontal pipe may be limited such that the lifting/lowering valve may efficiently move upward from the protruding pipe and during operation of the compressor, an amount of introduced refrigerant is not influenced, whereby compression efficiency may be prevented from decreasing.

In addition, according to the suction valve assembly of the compressor of the present invention, an inner cross-sectional area of a portion through which refrigerant is introduced to a horizontal pipe after passing by the lifting/lowering valve may be provided to be the same as or larger than an inner cross-sectional area of a vertical pipe. Accordingly, a stable flow of refrigerant may be secured.

Furthermore, the suction valve assembly of the compressor of the present invention may include a limiting member so as to limit an upward moving distance of the lifting/lowering valve and to accurately block a flow path. In this case, the limiting member may be provided in the vertical pipe of the body part, in a refrigerant discharge pipe of the accumulator, or independently of the body part and the accumulator.

An outer diameter of the lifting/lowering valve may be provided to be larger than an inner diameter of the limiting member and smaller than an inner diameter of the protruding pipe.

Additionally, according to the suction valve assembly of the compressor of the present invention, the limiting member and the lifting/lowering valve may be provided to be in surface contact with each other. Accordingly, oil may be maximally prevented from leaking to the accumulator.

In this compressor, the horizontal pipe of the body part may be directly connected to the compression chamber of the compressor or may be indirectly connected to the compression chamber by an additional refrigerant suction pipe.

In the compressor, the vertical pipe of the body part may be directly connected to the accumulator or may be indirectly connected to the accumulator by an additional refrigerant discharge pipe.

As described above, the suction valve assembly for a compressor is provided in a flow path guiding a refrigerant flow between the compressor and the accumulator so as to close the flow path when operation of the compressor stops, whereby oil in the compressor can be prevented from leaking.

In addition, according to the suction valve assembly for the compressor of the present invention, lifting and lowering movements of the lifting/lowering valve are performed by weight and the pressure difference between an inner part of the compression chamber and an inner part of the accumulator, whereby difficulty of maintenance caused by damage of an elastic member which may be caused by application of the elastic member such as a coil spring is solved.

Furthermore, according to the suction valve assembly for the compressor of the present invention, the lifting/lowering valve is provided to lift and lower by being guided by the protruding pipe while the lifting/lowering valve is received in the protruding pipe, whereby the lifting and lowering movements can be stably performed.

Additionally, according to the suction valve assembly for the compressor of the present invention, the lifting/lowering valve protrudes from the protruding pipe so as to optimize a height of the lifting/lowering valve exposed to a space positioned between the horizontal pipe and the vertical pipe, whereby loss of the amount of introduced refrigerant can be prevented.

In addition, according to the suction valve assembly for the compressor of the present invention, the lifting/lowering valve is configured to be the pipe body having a closed top surface and to have the one or more communicating holes provided in the circumferential surface of the upper portion thereof, whereby the lifting/lowering valve can be efficiently moved upward by pressure of refrigerant reversely flowing.

Furthermore, according to the suction valve assembly for the compressor of the present invention, at least a half portion of each of the communicating holes formed in the lifting/lowering valve is positioned so as to communicate with the inner part of the horizontal pipe. Accordingly, when refrigerant is reversely flowed by the pressure difference between the compressor and the accumulator during stopping of the operation of the compressor, the pressure of the refrigerant reversely flowing is efficiently supplied to the lifting/lowering valve, whereby the lifting/lowering valve can efficiently move upward and downward.

Additionally, according to the suction valve assembly for the compressor of the present invention, a height of the lifting/lowering valve protruding from the protruding pipe or a height of the lifting/lowering valve is determined such that while the lifting/lowering valve is received in the protruding pipe, the cross-sectional area of a communicating portion between the lifting/lowering valve and the horizontal pipe is provided to be the same as or larger than the cross-sectional area of the lifting/lowering valve in the vertical pipe. Accordingly, loss of the amount of the introduced refrigerant can be prevented.

In addition, according to the suction valve assembly for the compressor of the present invention, the limiting member is provided in the vertical pipe constituting the body part, so the upward moving distance of the lifting/lowering valve is limited.

Particularly, the limiting member may be provided to have various forms such as a ring-shaped protrusion provided by protruding from an inner circumferential surface of the vertical pipe along the inner circumferential surface, the refrigerant discharge pipe of the accumulator, or an additional member.

Furthermore, according to the suction valve assembly for the compressor of the present invention, since a contact portion between a lower surface of the ring-shaped limiting member and the top surface of the lifting/lowering valve is provided to have a plane or a slanting surface such that the lower surface of the limiting member and the top surface of the lifting/lowering valve correspond to each other so as to be in surface contact with each other, sealing maintenance can be efficiently performed during contact therebetween and the lifting/lowering valve can stop at an accurate position.

Additionally, according to the suction valve assembly for the compressor of the present invention, a chamfer is provided on an edge portion of the top surface of the lifting/lowering valve, whereby during operation, damage which may occur on the lifting/lowering valve or the limiting member can be minimized.

In addition, according to the suction valve assembly of the compressor of the present invention, since a bottom surface of the protruding pipe is provided to be closed, oil can be momentarily stored, and later the momentarily stored oil, together with refrigerant, can be supplied again into the compressor when the operation of the compressor restarts, whereby deficiency of oil in the compressor is prevented.

Furthermore, according to the suction valve assembly of the compressor of the present invention, the bottom surface of the protruding pipe is configured to be open and a closing cover is provided on the open bottom surface of the protruding pipe so as to open and close the open bottom surface, whereby when required, the lifting/lowering valve can be replaced with a new one, and thus maintenance is easy.

Additionally, the suction valve assembly of the compressor of the present invention is provided to be independent of the refrigerant suction pipe of the compressor and the refrigerant discharge pipe of the accumulator and to be connected to each of the refrigerant suction pipe and the refrigerant discharge pipe, and accordingly, manufacturing thereof is easy.

The above and other objects, features and other advantages of the present invention will be more clearly understood from the following detailed description when taken in conjunction with the accompanying drawings, in which:
FIG. 1 is a state view illustrating an applied state of a suction valve assembly of a compressor according to an embodiment of the present invention;
FIG. 2 is an exploded perspective view illustrating the suction valve assembly of the compressor according to the embodiment of the present invention;
FIG. 3 is an enlarged view of an "A" part of FIG. 1;
FIG. 4 is an enlarged view of an important part illustrating an example of a limiting member of the suction valve assembly of the compressor according to the embodiment of the present invention;
FIG. 5 is an enlarged view of an important part illustrating another example of the limiting member of the suction valve assembly of the compressor according to the embodiment of the present invention;
FIG. 6 is an enlarged view of an important part illustrating still another example of the limiting member of the suction valve assembly of the compressor according to the embodiment of the present invention;
FIG. 7 is a state view of an important part illustrating another example of a protruding pipe constituting the suction valve assembly of the compressor according to the embodiment of the present invention;
FIG. 8 is a front view illustrating a lifting/lowering valve constituting the suction valve assembly of the compressor according to the embodiment of the present invention;
FIG. 9 is a cross-sectional view taken along line I-I of FIG. 8;
FIGS. 10 to 12 are cross-sectional views illustrating various examples of the lifting/lowering valve constituting the suction valve assembly of the compressor according to the embodiment of the present invention;
FIG. 13 is a front view illustrating another example of a communicating hole of the lifting/lowering valve constituting the suction valve assembly of the compressor according to the embodiment of the present invention;
FIG. 14 is a state view illustrating still another example of the communicating hole of the lifting/lowering valve constituting the suction valve assembly of the compressor according to the embodiment of the present invention;
FIG. 15 is a state view of an important part illustrating another example of a surface contact structure of the limiting member and the lifting/lowering valve constituting the suction valve assembly of the compressor according to the embodiment of the present invention;
FIG. 16 is a front view illustrating another example of the lifting/lowering valve constituting the suction valve assembly of the compressor according to the embodiment of the present invention;
FIG. 17 is a state view illustrating a state of operation of the compressor of the suction valve assembly of the compressor according to the embodiment of the present invention;
FIG. 18 is an enlarged view of a "B" part of FIG. 17;
FIG. 19 is a state view illustrating a state in which the operation of the compressor of the suction valve assembly of the compressor according to the embodiment of the present invention stops; and
FIG. 20 is an enlarged view of a "C" part of FIG. 19.

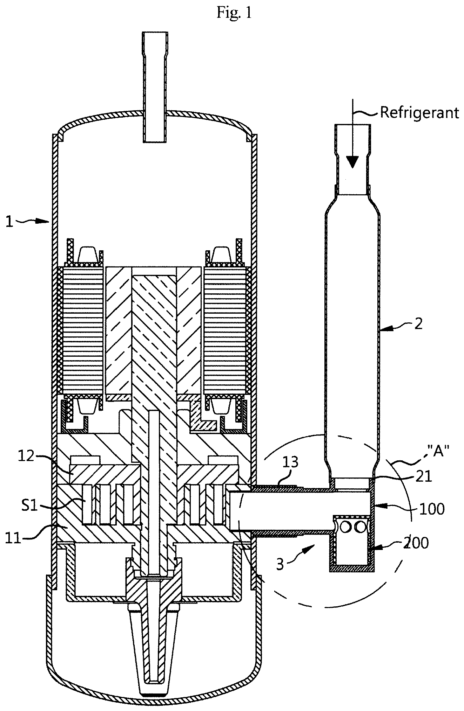

Hereinbelow, exemplary embodiments of the present invention will be described in detail with reference to FIGS. 1 to 20.

FIG. 1 is a state view illustrating an applied state of a suction valve assembly of the compressor according to an embodiment of the present invention.

As shown in FIG. 1, according to an embodiment of the suction valve assembly of the compressor of the present invention, the compressor 1, which is a scroll compressor, is configured to allow refrigerant to be sucked through a refrigerant suction pipe 13 formed through any one circumference of the fixed scroll 11 to a compression chamber S1 defined between the fixed scroll 11 and the orbiting scroll 12. In this case, the refrigerant is supplied to the refrigerant suction pipe 13 after passing through the accumulator 2. In this case, the compression chamber S1 includes a portion through which the refrigerant is introduced into the fixed scroll 11.

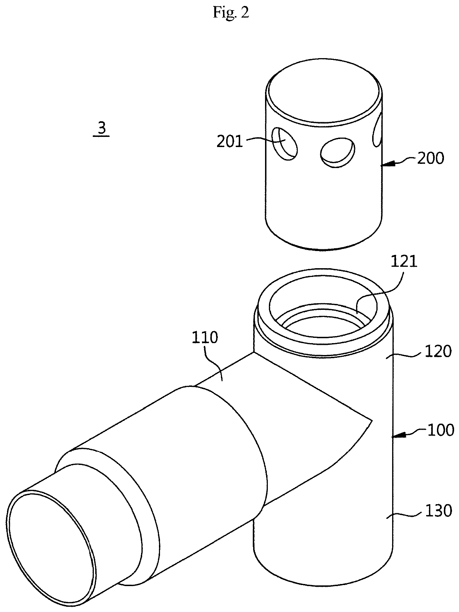

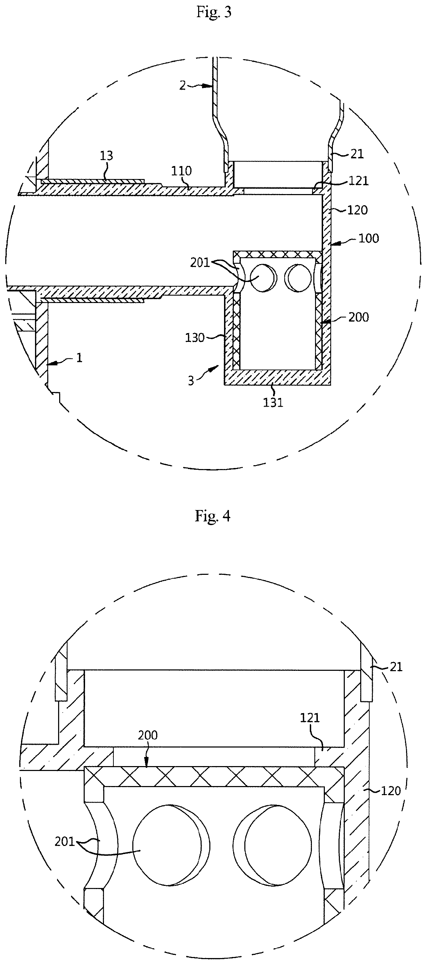

FIG. 2 is an exploded perspective view illustrating the suction valve assembly of the compressor according to the embodiment of the present invention, and FIG. 3 is an enlarged view of an "A" part of FIG. 1.

As shown in the drawings, the suction valve assembly 3 of the compressor according to the embodiment of the present invention (hereinbelow, referred to as "a suction valve assembly") largely includes a body part 100 and a lifting/lowering valve 200, and connects the compression chamber S1 of the compressor 1 with the accumulator 2 so as to guide a refrigerant flow and to prevent a reverse flow of refrigerant and oil.

This will be further described in detail by each of components.

First, the body part 100, which is a part constituting an outer surface of the suction valve assembly 3, is provided to be a pipe allowing refrigerant to flow along an inner part thereof.

The body part 100 includes a horizontal pipe 110 and a vertical pipe 120, the body part being formed in a bending or branching structure.

Here, the horizontal pipe 110 is horizontally provided so as to be connected to the compression chamber of the compressor 1, and the vertical pipe 120 is provided to extend upward from an end of the horizontal pipe 110 in a vertical direction, wherein an upper end of the vertical pipe 120 is connected to the accumulator 2. Preferably, the horizontal pipe 110 is provided to horizontally communicate with a circumference of the vertical pipe 120.

Particularly, as shown in FIG. 1, the horizontal pipe 110 is combined with the refrigerant suction pipe 13 constituting the compressor 1 so as to supply refrigerant to the compression chamber S1, and the vertical pipe 120 is combined with a refrigerant discharge pipe 21 constituting the accumulator 2 so as to receive refrigerant from the accumulator 2.

In this case, after the horizontal pipe 110 is press-fitted into and combined with the refrigerant suction pipe 13, the horizontal pipe 110 is provided integrally with the refrigerant suction pipe 13 by welding. After the vertical pipe 120 is press-fitted into and combined with the refrigerant discharge pipe 21, the vertical pipe 120 is provided to be integrated with the refrigerant discharge pipe 21 by welding. Accordingly, combination of the vertical pipe 120 and the refrigerant discharge pipe 21 with each other may be stably performed.

Although not shown, the horizontal pipe 110 and the vertical pipe 120 may be configured to be screwed to or variously combined with an inner part of the refrigerant suction pipe 13 and an inner part of the refrigerant discharge pipe 21, respectively.

Of course, the horizontal pipe 110 may be provided to be the refrigerant suction pipe 13 or the vertical pipe 120 may be provided to be the refrigerant discharge pipe 21.

In addition, the vertical pipe 120 includes a limiting member 121 provided therein. The limiting member 121 limits an upward moving distance of the lifting/lowering valve 200.

Particularly, as shown in FIG. 4, the limiting member 121 is a ring-shaped protrusion provided by protruding from an inner circumferential surface of the vertical pipe 120 along the inner circumferential surface.

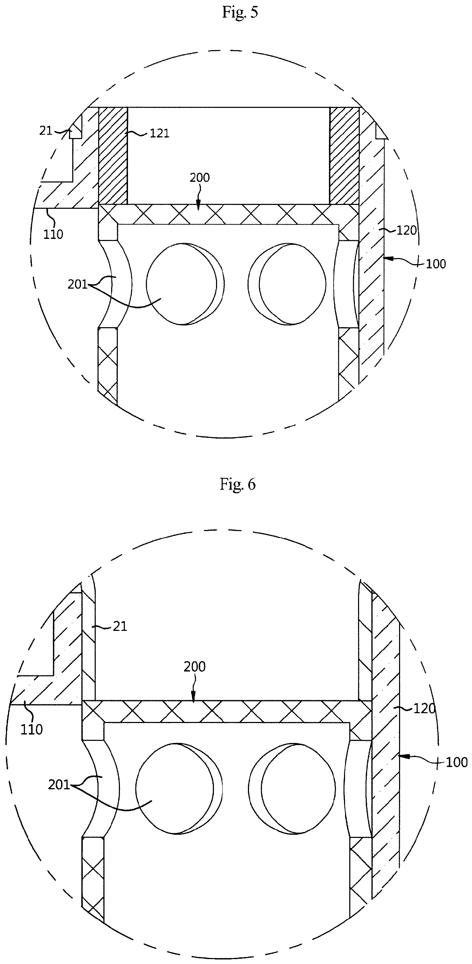

Of course, as shown in FIG. 5, the limiting member 121 may be provided to be a ring-shaped member press-fitted into and fixed to the vertical pipe 120 by being provided independently of the vertical pipe 120 or the refrigerant discharge pipe 21. In addition, as shown FIG. 6, the refrigerant discharge pipe 21 may be provided to be press-fitted into the vertical pipe 120 such that an end portion of the refrigerant discharge pipe 21 performs a function of the limiting member 121.

Although not shown, the limiting member 121 may be provided to be a protrusion protruding from an inner circumferential surface of the refrigerant discharge pipe 21 constituting the accumulator 2.

Particularly, a protruding distance of the limiting member 121 to an inner part of the vertical pipe 120 is required not to be excessively long to a degree to prevent the refrigerant flow or not to be excessively short to a degree capable of being damaged by repetitive collisions with the lifting/lowering valve 200. Accordingly, in the embodiment of the present invention, the protruding distance of the limiting member 121 (a protruding distance toward the inner part of the vertical pipe) is provided to block 5~20% of a portion adjacent to a circumference of a top surface of the lifting/lowering valve 200.

In addition, the body part 100 may be formed of iron or brass. That is, in consideration of a case in which the body part 100 is combined with the refrigerant suction pipe 13 or the refrigerant discharge pipe 21 by welding, the body part 100 is preferably formed of a material suitable to welding.

Meanwhile, the body part 100 further includes a protruding pipe 130. The protruding pipe 130 is a structure provided to guide lifting/lowering movements of the lifting/lowering valve 200, which will be described hereinafter.

Particularly, the protruding pipe 130 is positioned immediately under the vertical pipe 120 of a bent connection portion between the horizontal pipe 110 and the vertical pipe 120 constituting the body part 100, and is provided to be a pipe protruding in a direction contrary to a direction of the vertical pipe 120, wherein an upper surface of the protruding pipe is open toward the inner part of the vertical pipe 120. In this case, a protruding height of the protruding pipe 130 is determined by considering a height of the lifting/lowering valve 200, which will be described hereinafter.

Furthermore, the protruding pipe 130 is provided to have a lower part wall 131 such that a lower part thereof is closed. That is, the protruding pipe 130 is configured such that the inner part of the protruding pipe 130 may be blocked from an external environment by the lower part wall 131.

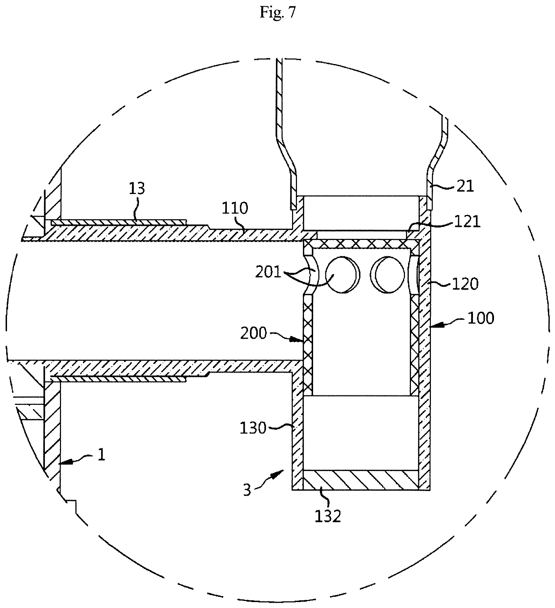

Of course, the protruding pipe 130 may be provided to be a pipe body having open upper and lower parts without the lower part wall 131, wherein the open lower part includes a closing cover 132 thereon so as to be opened and closed. Accordingly, when required, the inner part of the protruding pipe 130 may be opened so as to replace the lifting/lowering valve 200. This is shown in FIG. 7.

Next, the lifting/lowering valve 200 is configured to selectively open and close a flow path in the body part 100.

The lifting/lowering valve 200 is provided at a communicating portion, which is connected by bending, positioned between the horizontal pipe 110 and the vertical pipe 120 constituting the body part 100 so as to open and close the communicating portion between the horizontal pipe 110 and the vertical pipe 120.

Particularly, during operation of the compressor 1, the lifting/lowering valve 200 is moved downward by weight so as to open the communicating portion between the horizontal pipe 110 and the vertical pipe 120, and when the operation of the compressor 1 stops, the lifting/lowering valve 200 is moved upward by pressure difference between an inner part of the accumulator and an inner part of the compression chamber so as to close a communicating portion between the vertical pipe 120 and the refrigerant discharge pipe 21.

In the embodiment of the present invention, the lifting/lowering valve 200 is formed to be a pipe body having a top surface, which is closed, and a bottom surface, which is open.

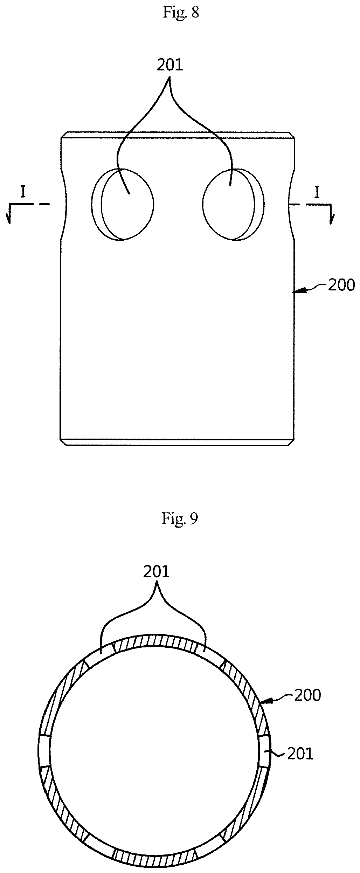

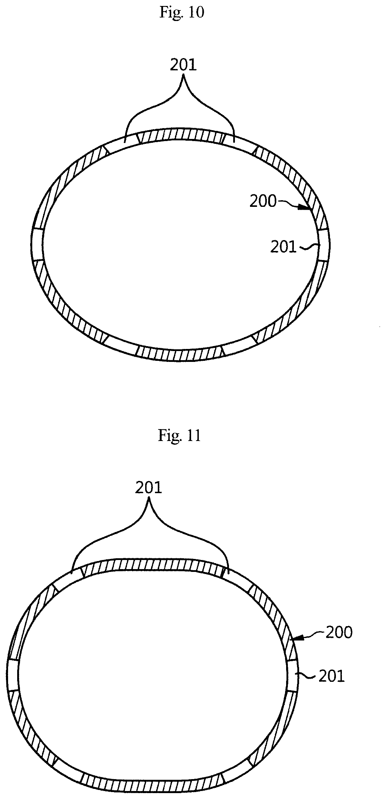

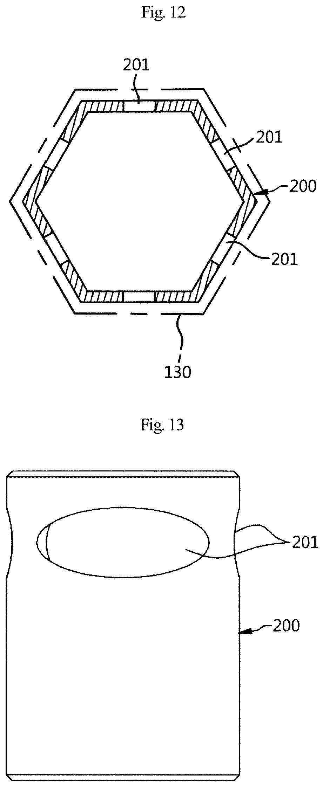

Preferably, according to the embodiment of the present invention, the lifting/lowering valve 200 is formed to have a cylindrical shape having a circular cross-section (See FIG. 9). Of course, the lifting/lowering valve 200 may be formed to have a cross-section of an oval shape (See FIG. 10), a rounded rectangle shape (See FIG. 11), or a polygonal shape (See FIG. 12).

In addition, at least a portion between an outer circumferential surface of the lifting/lowering valve 200 and an inner circumferential surface of the protruding pipe 121 may be provided to be in surface contact. For example, as shown in FIG. 12, in a polygonal structure of the lifting/lowering valve, the inner circumferential surface of the protruding pipe 121 is also formed to be the same polygonal structure as the structure of the lifting/lowering valve 200. Due to such a surface contact structure, the lifting/lowering valve 200 does not rotate in the protruding pipe 121 and may only perform accurate lifting and lowering movements.

In addition, according to the embodiment of the present invention, the lifting/lowering valve 200 includes one or more communicating holes 201 provided on the circumferential surface thereof, each of the communicating holes communicating with an inner part of the horizontal pipe 110. This is shown in FIG. 8.

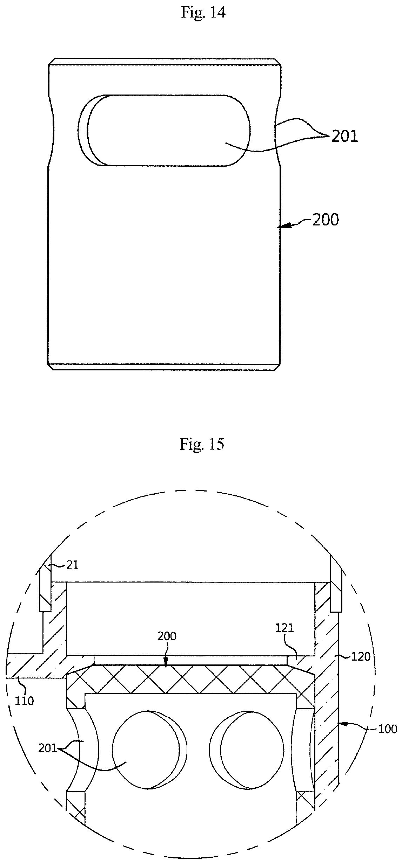

In this case, the communicating hole 201 is provided to have a circular shape and have a plurality of communicating holes along a circumferential direction of the lifting/lowering valve 200. Of course, the communicating hole 201 may be formed to have the oval shape as shown in FIG. 13, and to have the rounded rectangle shape as shown in FIG. 14.

Although not shown, the communicating hole 201 may be formed to have a non-circular shape except for the oval shape or the rounded rectangle shape. However, according to the embodiment of the present invention, the communicating hole 201 is preferably formed to have a round-shaped structure having an edge removed to the maximum such that during the refrigerant flow, a vortex, which may occur due to a portion of the edge, is minimized.

Furthermore, the lifting/lowering valve 200 is provided such that lifting and lowering movements thereof are guided by the protruding pipe 130 while at least a portion of the lifting/lowering valve 200 is positioned in the protruding pipe 130.

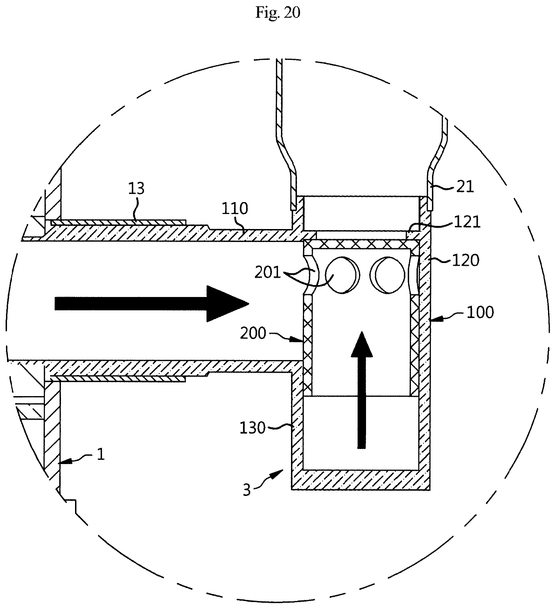

Preferably, the lifting/lowering valve 200 is provided to have a height to a degree that a portion of an upper part of the lifting/lowering valve 200 protrudes from the protruding pipe 130 and the remaining portion thereof is positioned in the protruding pipe 130 (See FIG. 3), and the lifting/lowering valve 200 is provided to have a height to be in a state in which at least a portion of the lifting/lowering valve 200 is received in the protruding pipe 130 (See FIG. 20) when the lifting/lowering valve 200 is moved upward by the pressure difference between the inner part of the compression chamber S1 and the inner part of the accumulator 2 when the operation of the compressor 1 stops. In addition, an outer diameter of the lifting/lowering valve 200 is provided to be larger than an inner diameter of the limiting member 121 and smaller than an inner diameter of the protruding pipe 130.

In addition, each of the communicating holes 201 provided in the lifting/lowering valve 200 is provided along a circumference of an upper portion of the lifting/lowering valve 200, and during operation of the compressor 1, at least a portion of the communicating hole is positioned so as to communicate with the inner part of the horizontal pipe 110 (See FIG. 3). That is, although a remaining portion of the lifting/lowering valve except for a portion of an upper part thereof is received in the protruding pipe as the compressor 1 operates, each of the communicating holes 201 is provided to communicate with the inner part of the horizontal pipe 110, whereby when the operation of the compressor 1 stops, the lifting/lowering valve 200 may be quickly moved upward by sufficient provision of pressure of refrigerant reversely flowing to the vertical pipe 120 from the horizontal pipe 110.

Preferably, at least a half portion of each of the communicating holes 201 is positioned so as to communicate with the inner part of the horizontal pipe 110.

In addition, a height of the lifting/lowering valve 200 protruding from the protruding pipe 130 or a height of the lifting/lowering valve 200 is determined such that a flow path cross-sectional area of the communicating portion between the lifting/lowering valve 200 received in the protruding pipe 130 and the horizontal pipe 110 is the same as or larger than a minimum cross-sectional area of the accumulator 2. Such a structure is provided such that refrigerant provided from the accumulator 2 may be prevented from leaking in a process of passing by a portion at which the lifting/lowering valve 200 is positioned.

Meanwhile, a contact portion between a lower surface of the limiting member 121 and the top surface of the lifting/lowering valve 200 is formed to be in surface contact. That is, the limiting member 121 and the lifting/lowering valve 200 are configured to be in surface contact with each other so as to maintain stable sealing therebetween.

The structure of the surface contact may be variously formed, and in the embodiment of the present invention, the contact portion between the lower surface of the limiting member 121 and the top surface of the lifting/lowering valve 200 facing the lower surface is formed to be a plane such that the lower surface of the limiting member 121 and the top surface of the lifting/lowering valve 200 are in surface contact with each other. This is shown in FIG. 4. Particularly, the limiting member 121 is preferably configured to contact with around 5~20% of an entire area of the top surface of the lifting/lowering valve 200 so as to prevent excessive blocking of the flow path and damage which may be caused by repetitive collisions of the lifting/lowering valve 200 with the limiting member or by pressure of the lifting/lowering valve 200 applied to the limiting member.

Of course, as shown in FIG. 15, each of the lower surface of the limiting member 121 and the top surface of the lifting/lowering valve 200 may be formed to have a slanting surface, and may be formed to have a round surface, which is not shown.

In addition, an edge portion of the top surface of the lifting/lowering valve 200 is provided to have a chamfer which is slanting or round (See FIGS. 2 and 8). The structure is intended to prevent damage (damage of the vertical pipe or damage of the lifting/lowering valve) caused by the edge of the top surface of the lifting/lowering valve 200 hitting the vertical pipe 120 when the lifting/lowering valve 200 is received into the vertical pipe 120 constituting the body part 100.

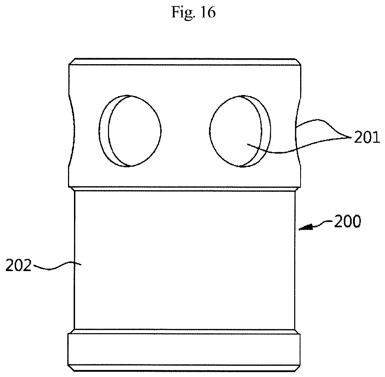

Meanwhile, an escaping groove 202 may be concavely formed on the outer circumferential surface of the lifting/lowering valve 200. The escaping groove 202 may be provided in such a manner that a lower part of a portion at which each of the communicating holes 201 is positioned on the outer circumferential surface of the lifting/lowering valve 200 is configured to have a step compared to other portions thereof, whereby during movement of the lifting/lowering valve 200, oil resistance which may be caused by oil existing between the outer circumferential surface of the lifting/lowering valve 200 and the inner circumferential surface of the protruding pipe 130 may be reduced. This is shown in FIG. 16.

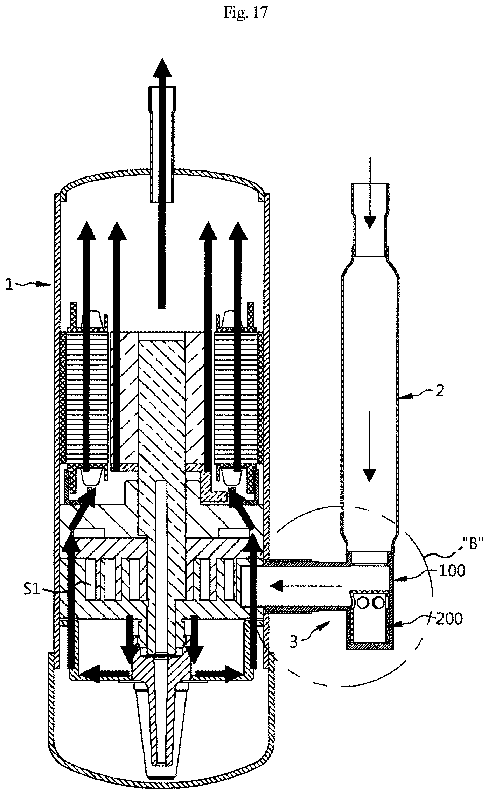

Hereinbelow, the operation of the suction valve assembly 3 according to the embodiment of the present invention, which is described above, will be further described in detail with reference to state views of FIGS. 17 to 20.

First, as shown in FIG. 17, when the compressor operates, refrigerant passing through the accumulator 2 is supplied through the refrigerant discharge pipe 21 into the vertical pipe 120 of the body part 100 and is continuously supplied through the horizontal pipe 110 into the compression chamber S1.

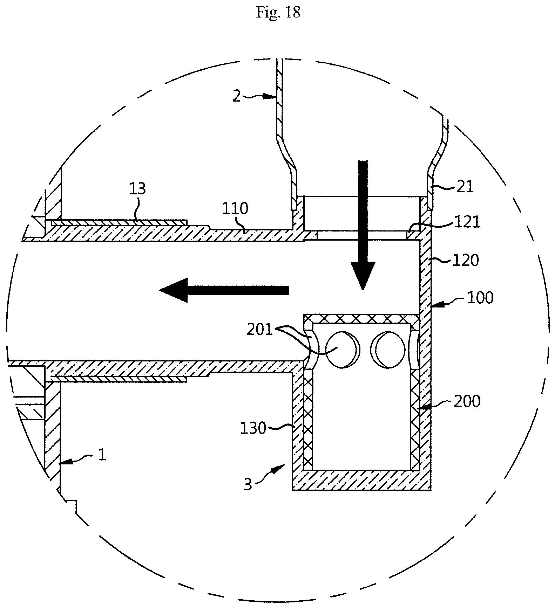

In this case, the lifting/lowering valve 200 provided between the vertical pipe 120 and the horizontal pipe 110 is positioned to be received in the protruding pipe 130 (See FIGS. 17 and 18) by flow pressure of refrigerant introduced from the accumulator 2 such that the communicating portion between the horizontal pipe 110 and the vertical pipe 120 may be open. Of course, although the lifting/lowering valve 200 is received in the protruding pipe 130, a portion of the top part of the lifting/lowering valve 200 protrudes from the protruding pipe 130 and a plurality of communicating holes 201 formed along the circumference thereof communicate with the inner part of the horizontal pipe 110.

Meanwhile, as described above, when a refrigeration cycle is stopped by a periodical or selective operation control during the operation of the compressor 1 or when the operation of the compressor 1 stops, refrigerant compression is not performed any longer and refrigerant supply from the accumulator 2 is stopped.

In this case, since the compression chamber S1 is in a high-pressure state but the inner part of the accumulator 2 is in a relative low-pressure state compared to the compression chamber S1, the high-pressure refrigerant in the compression chamber S1 reversely flows into the accumulator 2 due to such pressure difference. In this process, oil in the compressor 1 reversely flows to the accumulator 2 by following the high-pressure refrigerant due to counterpressure supplied during the reverse flow of the refrigerant.

However, during the reverse flow of refrigerant and oil as described above, the lifting/lowering valve 200 moves upward while a portion of the refrigerant reversely flowing prior to the oil is introduced through the communicating holes 201 exposed to the inner part of the horizontal pipe 110 into the lifting/lowering valve 200. Particularly, the inner part of the protruding pipe 130 is also in a high-pressure state due to impact of the high-pressure of the reverse flow and accordingly, the lifting/lowering valve 200 more efficiently moves upward.

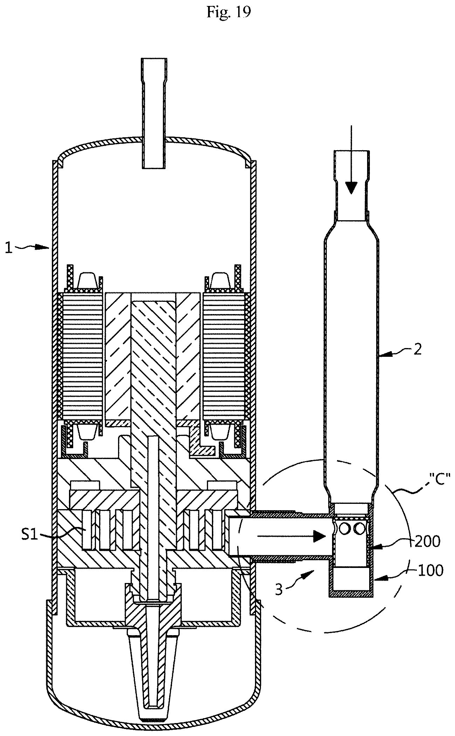

Accordingly, when the lifting/lowering valve 200 moves upward and is in a surface contact with the limiting member 121, the vertical pipe 120 is in a closed state. Accordingly, further reverse flow of refrigerant is prevented and the oil reversely flowing by following the refrigerant does not pass through the vertical pipe 120 so as to be prevented from being discharged to the accumulator 2. This is shown in FIGS. 19 and 20.

Of course, a portion of the oil may be introduced into the protruding pipe 130, but, together with refrigerant in the accumulator 2, the oil remaining in the protruding pipe 130 after being introduced thereinto is reintroduced into the compression chamber S1 by suction pressure supplied by the compression chamber S1 during subsequent reoperation of the compressor 1, and then cools and lubricates sliding portions in the compressor 1.

Finally, the suction valve assembly 3 of the compressor of the present invention is provided in a flow path guiding a refrigerant flow between the compressor 1 and the accumulator 2 so as to close the flow path when operation of the compressor 1 stops, whereby oil in the compressor 1 is prevented from leaking.

In addition, according to the suction valve assembly 3 of the compressor of the present invention, the lifting and lowering movements of the lifting/lowering valve 200 are performed by the weight and the pressure difference existing between an inner part of the compression chamber 1 and an inner part of the accumulator 2, whereby difficulty of maintenance caused by damage of an elastic member which may be caused by application of the elastic member such as a coil spring may be solved.

Furthermore, according to the suction valve assembly 3 of the compressor of the present invention, the lifting/lowering valve 200 is provided to lift and lower by being guided by the protruding pipe 130 while the lifting/lowering valve 200 is received in the protruding pipe 130, whereby the lifting and lowering movements may be stably performed.

Additionally, according to the suction valve assembly 3 of the compressor of the present invention, the lifting/lowering valve 200 protrudes from the protruding pipe 130 so as to optimize a height of the valve exposed to a space positioned between the horizontal pipe 110 and the vertical pipe 120, whereby loss of the amount of introduced refrigerant may be prevented.

In addition, according to the suction valve assembly 3 of the compressor of the present invention, the lifting/lowering valve 200 is provided to be the pipe body having a closed top surface and to have the one or more communicating holes 201 provided in the circumferential surface of the upper portion thereof, whereby the lifting/lowering valve 200 may be efficiently moved upward by pressure of refrigerant reversely flowing.

Furthermore, according to the suction valve assembly 3 of the compressor of the present invention, at least the half portion of each of the communicating holes 201 formed in the lifting/lowering valve 200 is positioned so as to communicate with the inner part of the horizontal pipe 110. Accordingly, when refrigerant is reversely flowed by the pressure difference between the compressor 1 and the accumulator 2 during stopping of the operation of the compressor 1, the pressure of the refrigerant reversely flowing is efficiently supplied to the lifting/lowering valve, whereby the lifting/lowering valve 200 may efficiently move upward and downward.

Additionally, according to the suction valve assembly 3 of the compressor of the present invention, a height of the lifting/lowering valve 200 protruding from the protruding pipe 130 or a height of the lifting/lowering valve 200 is provided to be determined such that while the lifting/lowering valve is received in the protruding pipe, the cross-sectional area of the communicating portion between the lifting/lowering valve 200 and the horizontal pipe 110 is provided to be the same as or larger than the cross-sectional area of the lifting/lowering valve 200 in the vertical pipe 120. Accordingly, loss of the amount of the introduced refrigerant may be prevented.

In addition, according to the suction valve assembly 3 of the compressor of the present invention, since the limiting member 121 is provided in the vertical pipe 120 constituting the body part 100, the upward moving distance of the lifting/lowering valve 200 may be limited.

Particularly, the limiting member 121 may be provided to have various forms such as a ring-shaped protrusion provided by protruding from the inner circumferential surface of the vertical pipe 120 or the refrigerant discharge pipe 21 along the inner circumferential surface, or an additional ring-shaped member.

Furthermore, according to the suction valve assembly 3 of the compressor of the present invention, since the contact portion between the lower surface of the limiting member 121 and the top surface of the lifting/lowering valve 200 is provided to have a plane or a slanting surface such that the lower surface and the top surface correspond to each other so as to be in surface contact with each other, sealing maintenance may stably performed during contact therebetween and the lifting/lowering valve 200 may stop at an accurate position.

Additionally, in the suction valve assembly 3 of the compressor of the present invention, the chamfer is provided on the edge portion of the top surface of the lifting/lowering valve 200, whereby during operation, damage which may occur on the lifting/lowering valve 200 or the limiting member 121 can be minimized.

In addition, according to the suction valve assembly 3 of the compressor of the present invention, since the bottomsurface of the protruding pipe 130 is provided to be closed, oil may be momentarily stored, and later the momentarily stored oil, together with refrigerant, may be supplied again into the compressor 1 when the operation of the compressor 1 restarts, whereby deficiency of oil in the compressor 1 is prevented.

Furthermore, in the suction valve assembly 3 of the compressor of the present invention, the bottom surface of the protruding pipe 130 is formed to be open, wherein the bottom surface of the open protruding pipe 130 has the closing cover 132 provided thereon to be opened and closed. Accordingly, the lifting/lowering valve 200 may be replaced when required, and thus maintenance becomes easy.

Additionally, the suction valve assembly 3 of the compressor of the present invention is provided independently of the refrigerant suction pipe 13 of the compressor 1 and the refrigerant discharge pipe 21 of the accumulator 2 so as to be connected to each of the refrigerant suction pipe 13 and the refrigerant discharge pipe 21, and accordingly, manufacturing thereof is easy.

Meanwhile, the suction valve assembly 3 of the compressor of the present invention is not limited to be applied just to the scroll compressor. That is, the suction valve assembly may also be applied to a rotary compressor, although the rotary compressor is not shown.

Accordingly, the suction valve assembly of the compressor of the present invention may be referred to as a useful invention which can be variously applied.

## Claims

1. A compressor comprising an accumulator (2) and a suction valve assembly (3), the suction valve assembly comprising:
a body part (100) having a horizontal pipe (110) connected to a compression chamber of the compressor;
a vertical pipe (120) connected vertically to the horizontal pipe (110), an end of the vertical pipe (120) being connected to the accumulator (2);
a protruding pipe (130) provided under the vertical pipe (120) by being protruded in a direction contrary to a direction of the vertical pipe (120) relative to the horizontal pipe (110), an upper surface of the protruding pipe being open; and
a lifting/lowering valve (200) provided in a connection portion between the horizontal pipe (110) and the vertical pipe (120) constituting the body part (100), being a pipe body, a top surface of which is closed, and a circumferential surface of which includes one or more communicating holes (201) provided thereon, each of the one or more communicating holes (201) communicating with an inner part of the horizontal pipe,
wherein the lifting/lowering valve (200) is provided such that lifting and lowering movements thereof are guided by the protruding pipe (130) while at least a portion of the lifting/lowering valve (200) is positioned in the protruding pipe (130),
wherein when the compressor operates, the lifting/lowering valve (200) is moved downward by weight so as to open the connection portion, and when the operation of the compressor stops, the lifting/lowering valve (200) is moved upward by pressure difference between an inner part of the accumulator and an inner part of the compression chamber so as to close the connection portion,
wherein the one or more communicating holes (201) are provided along a circumference of the upper portion of the lifting/lowering valve (200), and at least a portion of the communication holes (201) is positioned to communicate with an inner part of the horizontal pipe (110) when the lifting/lowering valve (200) is moved upward and downward.

2. The compressor of claim 1, wherein a bottom surface of the protruding pipe (130) is closed.

3. The compressor of claim 1, wherein the pipe body (100) has a horizontal cross-section having a shape of circle, oval, polygon, or polygon having one or more rounded edges.

4. The compressor of claim 1 or 3, wherein the lifting/lowering valve (200) is configured to have a height such that an upper portion thereof protrudes from the protruding pipe (130) during compression operation.

5. The compressor of any one of claims 1 to 4, wherein the one or more communicating holes (201) are positioned such that at least a half portion of each of the one or more communicating holes (201) communicates with the inner part of the horizontal pipe (110).

6. The compressor of any one of claims 1 to 5, wherein an escaping groove (202) is concavely formed on an outer circumferential surface of the lifting/lowering valve.

7. The compressor of any one of claims 1 to 6, wherein a limiting member (121) for limiting an upward moving distance of the lifting/lowering valve (200) is provided in the vertical pipe (120).

8. The compressor of claim 7, wherein the limiting member (121) is a ring-shaped protrusion protruding from an inner circumferential surface of the vertical pipe (120), or a ring-shaped member fitted into the inner circumferential surface of the vertical pipe (120).

9. The compressor of claim 8, wherein an outer diameter of the lifting/lowering valve (200) is larger than an inner diameter of the limiting member (121) and smaller than an inner diameter of the protruding pipe (130).

10. The compressor of any one of claims 7 to 9, wherein during an upward movement of the lifting/lowering valve (200), a lower surface of the limiting member (121) and the top surface of the lifting/lowering valve (200) are provided to be in surface contact with each other.

11. The compressor of any one of claims 1 to 10, wherein an outer circumferential surface of the lifting/lowering valve (200) and an inner circumferential surface of the protruding pipe (130) are provided to be in surface contact with each other in at least a portion thereof.

12. The compressor of any one of claims 1 to 11, wherein the compressor includes a refrigerant suction pipe (13) provided to supply refrigerant into the compression chamber, and
the horizontal pipe (110) is provided so as to be connected to the refrigerant suction pipe (13).

13. The compressor of any one of claims 1 to 11, wherein the accumulator (2) is provided with a refrigerant discharge pipe discharging refrigerant, and
the vertical pipe (120) is provided to be connected to the refrigerant discharge pipe of the accumulator (2).

## Patentansprüche

1. Verdichter, der einen Sammler (2) und eine Saugventilanordnung (3) aufweist, wobei die Saugventilanordnung aufweist:
einen Körperteil (100) mit einem horizontalen Rohr (110), das mit einer Verdichtungskammer des Verdichters verbunden ist,
ein vertikales Rohr (120), das vertikal mit dem horizontalen Rohr (110) verbunden ist, wobei ein Ende des vertikalen Rohrs (120) mit dem Sammler (2) verbunden ist,
ein vorstehendes Rohr (130), das unter dem vertikalen Rohr (120) vorgesehen ist, indem es in einer Richtung entgegengesetzt zu einer Richtung des vertikalen Rohrs (120) relativ zum horizontalen Rohr (110) vorsteht, wobei eine obere Fläche des vorstehenden Rohrs offen ist, und
ein Hebe-/Senkventil (200), das in einem Verbindungsabschnitt zwischen dem horizontalen Rohr (110) und dem vertikalen Rohr (120) vorgesehen ist, der den Körperteil (100) bildet, wobei es sich um einen Rohrkörper handelt, dessen obere Fläche geschlossen ist und dessen Umfangsfläche ein oder mehrere daran vorgesehene Verbindungslöcher (201) aufweist, wobei jedes des einen oder mehreren Verbindungslöcher (201) mit einem inneren Teil des horizontalen Rohrs in Verbindung steht,
wobei das Hebe-/Senkventil (200) so vorgesehen ist, dass dessen Hebe- und Senkbewegungen durch das vorstehende Rohr (130) geführt werden, während mindestens ein Teil des Hebe-/Senkventils (200) in dem vorstehenden Rohr (130) positioniert ist,
wobei, wenn der Verdichter arbeitet, das Hebe-/Senkventil (200) durch sein Gewicht nach unten bewegt wird, um den Verbindungsabschnitt zu öffnen, und wenn der Betrieb des Verdichters stoppt, das Hebe-/Senkventil (200) durch die Druckdifferenz zwischen einem inneren Teil des Sammlers und einem inneren Teil der Verdichtungskammer nach oben bewegt wird, um den Verbindungsabschnitt zu schließen,
wobei das eine oder die mehreren Verbindungslöcher (201) entlang eines Umfangs des oberen Abschnitts des Hebe-/Senkventils (200) vorgesehen sind und mindestens ein Abschnitt der Verbindungslöcher (201) so positioniert ist, dass er mit einem inneren Teil des horizontalen Rohrs (110) in Verbindung steht, wenn das Hebe-/Senkventil (200) nach oben und nach unten bewegt wird.

2. Verdichter nach Anspruch 1, wobei eine Unterseite des vorstehenden Rohrs (130) geschlossen ist.

3. Verdichter nach Anspruch 1, wobei der Rohrkörper (100) einen horizontalen Querschnitt in Form eines Kreises, Ovals, Polygons oder Polygons mit einer oder mehreren abgerundeten Kanten aufweist.

4. Verdichter nach Anspruch 1 oder 3, wobei das Hebe-/Senkventil (200) so konfiguriert ist, dass es eine solche Höhe hat, dass ein oberer Abschnitt davon während des Verdichtungsbetriebs aus dem vorstehenden Rohr (130) vorsteht.

5. Verdichter nach einem der Ansprüche 1 bis 4, wobei das eine oder die mehreren Verbindungslöcher (201) so angeordnet sind, dass mindestens ein halber Abschnitt jedes des einen oder der mehreren Verbindungslöcher (201) mit dem inneren Teil des horizontalen Rohrs (110) in Verbindung steht.

6. Verdichter nach einem der Ansprüche 1 bis 5, wobei eine Austrittsnut (202) konkav an einer Außenumfangsfläche des Hebe-/Senkventils ausgebildet ist.

7. Verdichter nach einem der Ansprüche 1 bis 6, wobei ein Begrenzungselement (121) zur Begrenzung einer Aufwärtsbewegungsstrecke des Hebe-/Absenkventils (200) im vertikalen Rohr (120) vorgesehen ist.

8. Verdichter nach Anspruch 7, wobei das Begrenzungselement (121) ein ringförmiger Vorsprung ist, der von einer Innenumfangsfläche des vertikalen Rohrs (120) vorsteht, oder ein ringförmiges Element, das in die Innenumfangsfläche des vertikalen Rohrs (120) eingepasst ist.

9. Verdichter nach Anspruch 8, wobei ein Außendurchmesser des Hebe-/Senkventils (200) größer als ein Innendurchmesser des Begrenzungselements (121) und kleiner als ein Innendurchmesser des vorstehenden Rohrs (130) ist.

10. Verdichter nach einem der Ansprüche 7 bis 9, wobei während einer Aufwärtsbewegung des Hebe-/Senkventils (200) eine untere Fläche des Begrenzungselements (121) und die obere Fläche des Hebe-/Senkventils (200) so vorgesehen sind, dass sie in Oberflächenkontakt miteinander stehen.

11. Verdichter nach einem der Ansprüche 1 bis 10, wobei eine Außenumfangsfläche des Hebe-/Senkventils (200) und eine Innenumfangsfläche des vorstehenden Rohrs (130) so vorgesehen sind, dass sie mindestens in einem Abschnitt davon in Oberflächenkontakt miteinander stehen.

12. Verdichter nach einem der Ansprüche 1 bis 11, wobei der Verdichter ein Kältemittelsaugrohr (13) aufweist, das vorgesehen ist, um Kältemittel in die Verdichtungskammer zuzuführen, und
das horizontale Rohr (110) vorgesehen ist, mit dem Kältemittelsaugrohr (13) verbunden zu werden.

13. Verdichter nach einem der Ansprüche 1 bis 11, wobei der Sammler (2) mit eine, Kältemittelabgaberohr versehen ist, das Kältemittel abgibt, und
das vertikale Rohr (120) vorgesehen ist, mit dem Kältemittelabgaberohr des Sammlers (2) verbunden zu werden.

## Revendications

1. Compresseur comprenant un accumulateur (2) et un ensemble de vannes d'aspiration (3), ledit ensemble de vannes d'aspiration comprenant :
une partie de corps (100) comportant une conduite horizontale (110) reliée à une chambre de compression du compresseur ;
une conduite verticale (120) reliée verticalement à la conduite horizontale (110), une extrémité de la conduite verticale (120) étant reliée à l'accumulateur (2) ;
une conduite en saillie (130) prévue sous la conduite verticale (120) et faisant saillie dans une direction opposée à celle de la conduite verticale (120) par rapport à la conduite horizontale (110), une surface supérieure de la conduite en saillie étant ouverte ; et
une vanne de levage/d'abaissement (200) prévue dans une partie de connexion entre la conduite horizontale (110) et la conduite verticale (120) constituant la partie de corps (100), étant un corps de tuyau dont la surface supérieure est fermée et la surface circonférentielle comprend un ou plusieurs trous de communication (201), chacun des trous de communication (201) communiquant avec une partie intérieure de la conduite horizontale,
où la vanne de levage/d'abaissement (200) est prévue de sorte que ses mouvements de levage et d'abaissement soient guidés par la conduite en saillie (130), au moins une partie de la vanne de levage/d'abaissement (200) étant positionnée dans la conduite en saillie (130),
où, lorsque le compresseur fonctionne, la vanne de levage/d'abaissement (200) est déplacée vers le bas sous l'effet de son poids de manière à ouvrir la partie de connexion, et lorsque le compresseur arrête de fonctionner, la vanne de levage/d'abaissement (200) est déplacée vers le haut sous l'effet de la différence de pression entre une partie intérieure de l'accumulateur et une partie intérieure de la chambre de compression, de manière à fermer la partie de connexion,
où le ou les trous de communication (201) sont prévus le long d'une circonférence de la partie supérieure de la vanne de levage/d'abaissement (200), et au moins une partie des trous de communication (201) est disposée de manière à communiquer avec une partie intérieure de la conduite horizontale (110) lorsque la vanne de levage/d'abaissement (200) est déplacée vers le haut et vers le bas.

2. Compresseur selon la revendication 1, où une surface inférieure de la conduite en saillie (130) est fermée.

3. Compresseur selon la revendication 1, où le corps de conduite (100) a une section transversale horizontale ayant la forme d'un cercle, d'un ovale, d'un polygone ou d'un polygone ayant un ou plusieurs bords arrondis.

4. Compresseur selon la revendication 1 ou la revendication 3, où la vanne de levage/d'abaissement (200) est prévue pour avoir une hauteur telle qu'une partie supérieure de celle-ci dépasse de la conduite en saillie (130) pendant une action de compression.

5. Compresseur selon l'une des revendications 1 à 4, où le ou les trous de communication (201) sont disposés de telle sorte qu'au moins une moitié dudit ou de chacun desdits trous de communication (201) communique avec la partie intérieure de la conduite horizontale (110).

6. Compresseur selon l'une des revendications 1 à 5, où une rainure d'échappement (202) est formée de manière concave sur une surface circonférentielle extérieure de la vanne de levage/d'abaissement.

7. Compresseur selon l'une des revendications 1 à 6, où un élément de limitation (121) pour limiter une distance de déplacement vers le haut de la vanne de levage/d'abaissement (200) est prévu dans la conduite verticale (120).

8. Compresseur selon la revendication 7, où l'élément de limitation (121) est une saillie annulaire s'étendant depuis une surface circonférentielle intérieure de la conduite verticale (120), ou un élément annulaire ajusté dans la surface circonférentielle intérieure de la conduite verticale (120).

9. Compresseur selon la revendication 8, où le diamètre extérieur de la vanne de levage/d'abaissement (200) est supérieur au diamètre intérieur de l'élément de limitation (121) et inférieur au diamètre intérieur de la conduite en saillie (130).

10. Compresseur selon l'une des revendications 7 à 9, où, pendant un mouvement vers le haut de la vanne de levage/d'abaissement (200), une surface inférieure de l'élément de limitation (121) et la surface supérieure de la vanne de levage/d'abaissement (200) sont prévues pour être en contact superficiel l'une avec l'autre.

11. Compresseur selon l'une des revendications 1 à 10, où une surface circonférentielle extérieure de la vanne de levage/d'abaissement (200) et une surface circonférentielle intérieure de la conduite en saillie (130) sont prévues pour être en contact superficiel l'une avec l'autre au moins partiellement.

12. Compresseur selon l'une des revendications 1 à 11, où le compresseur comprend une conduite d'aspiration de réfrigérant (13) prévue pour alimenter la chambre de compression en réfrigérant, et
la conduite horizontale (110) est prévue pour être raccordée à la conduite d'aspiration du réfrigérant (13).

13. Compresseur selon l'une des revendications 1 à 11, où l'accumulateur (2) est pourvu d'une conduite de refoulement de réfrigérant qui refoule le réfrigérant, et
la conduite verticale (120) est prévue pour être raccordée à la conduite de refoulement de réfrigérant de l'accumulateur (2).
